(19) Europäisches Patentamt / European Patent Office / Office européen des brevets

(11) **EP 3 186 776 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(21) Anmeldenummer: **15767099.3**

(22) Anmeldetag: **27.08.2015**

(51) Int Cl.:
*G06T 5/00* (2006.01)     *H04N 5/235* (2006.01)
*G06T 5/50* (2006.01)     *H04N 5/232* (2006.01)

(86) Internationale Anmeldenummer:
**PCT/EP2015/069683**

(87) Internationale Veröffentlichungsnummer:
**WO 2016/030479 (03.03.2016 Gazette 2016/09)**

(54) **BILDAUFNAHMEVORRICHTUNG UND VERFAHREN ZUR BILDAUFNAHME**

IMAGE CAPTURING DEVICE AND METHOD FOR IMAGE CAPTURING

DISPOSITIF ET PROCÉDÉ DE PRISES DE VUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2014 DE 102014112417**
**03.09.2014 DE 102014112648**

(43) Veröffentlichungstag der Anmeldung:
**05.07.2017 Patentblatt 2017/27**

(73) Patentinhaber: **Carl Zeiss Microscopy GmbH 07745 Jena (DE)**

(72) Erfinder:
• **STOPPE, Lars**
**07743 Jena (DE)**
• **MILDE, Thomas**
**07616 Nausnitz (DE)**
• **HANFT, Marco**
**07743 Jena (DE)**

(74) Vertreter: **Sticht, Andreas Kraus & Weisert Patentanwälte PartGmbB Thomas-Wimmer-Ring 15 80539 München (DE)**

(56) Entgegenhaltungen:
WO-A2-2009/095422     DE-A1-102011 076 435
US-A1- 2011 311 107     US-A1- 2012 098 950

• GUOAN ZHENG ET AL: "Wide-field, high-resolution Fourier ptychographic microscopy", NATURE PHOTONICS, Bd. 7, Nr. 9, 28. Juli 2013 (2013-07-28), Seiten 739-745, XP055181687, ISSN: 1749-4885, DOI: 10.1038/nphoton.2013.187

**Beschreibung**

GEBIET DER ERFINDUNG

Ausführungsbeispiele der Erfindung betreffen Vorrichtungen und Verfahren zur Bildaufnahme. Ausführungsbeispiele betreffen insbesondere derartige Vorrichtungen und Verfahren, die eine rechnerische Korrektur von Abbildungsfehlern ermöglichen.

HINTERGRUND

Moderne optische Systeme sollen immer höheren Anforderungen an die Bildqualität genügen. Zu wichtigen Aberrationen, die durch die Ausgestaltung des Optiksystems gering gehalten werden sollen, gehören beispielsweise Bildfeldwölbung und Astigmatismus. Bei einer Bildfeldwölbung entsteht je nach Feldpunkt das Bild in einer anderen Ebene entlang der optischen Achse. Für planare Bildfelder, beispielsweise einen Kamerachip, ergibt sich so ein feldabhängiger Defokusfehler.

Um derartige Fehler zu reduzieren können hochgenaue und qualitativ hochwertige Optiken verwendet werden. Dies führt oft zu aufwendigen, großen und teuren Optiksystemen. Darüber hinaus kann mit größerer Anzahl von Linsen die Reflexanfälligkeit des Systems erhöht und/oder die Transmission verringert werden. Für viele Anwendungen, beispielsweise im Bereich teurer Spezialgeräte, kann dies nachteilig sein.

Alternativ oder zusätzlich können wenigstens in Spezialanwendungen zur Bildfeldwölbungskorrektur Bildsensoren mit gewölbten Bildsensorflächen verwendet werden. Dies ist jedoch nicht immer möglich und führt zu erhöhten Kosten. Eine weitere Möglichkeit zur Reduzierung des Defokusfehlers, der durch die Bildfeldwölbung verursacht wird, besteht in der Verwendung von optischen Systemen, deren Gesamt-Schärfentiefe größer ist als die Objektfeldwölbung. Hierzu muss jedoch die numerische Apertur des Gesamtsystems verringert werden, was zu Auflösungsverlusten führt.

Alternativ können günstigere Optiken in Kombination mit anschließender Nachverarbeitung verwendet. Vorrichtungen und Verfahren, die billigere Optiken mit anschließender Nachverarbeitung kombinieren, können Entfaltungstechniken bei der digitalen Weiterverarbeitung beinhalten. Derartige Techniken, beispielsweise iterative Entfaltungstechniken, sind häufig mit hohem Rechenaufwand verbunden. Dies kann sich insbesondere dann als nachteilig erweisen, wenn eine schnelle Berechnung eines Bildes erwünscht wird, beispielsweise zur Echtzeitdarstellung aufgenommener Präparatbereiche bei einem Mikroskopsystem. Direkte Entfaltungsmethoden können an geringer Genauigkeit leiden und haben einen eingeschränkten Anwendungsbereich. Ein geringer Kontrast der Modulationsübertragungsfunktion ("Modulation Transfer Function", MTF) und/oder ein schlechtes Signal-zu-Rausch Verhältnisses (SNR) des Bildes kann dazu führen, dass sich mit Entfaltungstechniken bestimmte Ortsfrequenzen nicht oder nur unter gewissen Zusatzannahmen rekonstruieren lassen. Dies kann beispielsweise für Ortsfrequenzbereiche der Fall sein, bei denen die MTF aberrationsbedingt Nullstellen aufweist. Derartige Nullstellen in der MTF können beispielsweise bei Astigmatismus oder Defokus auftreten. Farblängsfehler können mit Entfaltungstechniken nicht einfach kompensierbar sein.

Die US 2012/098950 A1 offenbart eine Bildaufnahmevorrichtung gemäß dem Oberbegriff des Anspruchs 1, wobei Bildsequenzen eines Objekts aus verschiedenen Positionen aufgenommen werden und Bildkorrekturen mittels Bewegungsvektoren über das gesamte ermittelte Bild hinweg ermöglicht werden.

Die WO 2009/095422 A2 und die DE 10 2011 076 435 A1 offenbaren weitere Bildaufnahmevorrichtungen mit Beleuchtungen aus verschiedenen Richtungen und Anwenden einer Bildkorrektur.

ZUSAMMENFASSUNG

Es besteht ein Bedarf an verbesserten Techniken zur Abbildung eines Objekts. Es besteht insbesondere ein Bedarf an Vorrichtungen und Verfahren, die den Einsatz kostengünstiger Abbildungsoptiken erlauben und die die rechnerische Komplexität bei der digitalen Weiterverarbeitung im Vergleich zu Entfaltungstechniken verringern können. Es besteht insbesondere ein Bedarf an Vorrichtungen und Verfahren, mit denen feldpunktabhängige Defokusfehler korrigierbar sind.

Nach Ausführungsbeispielen werden Vorrichtungen und Verfahren wie in den unabhängigen Ansprüchen definiert angegeben, bei denen ein Objekt unter einer Mehrzahl von Beleuchtungswinkeln beleuchtet und jeweils ein Bild aufgenommen wird. Die Mehrzahl von Bildern wird rechnerisch weiterverarbeitet. Dabei wird eine Bildkorrektur auf jedes Bild der Mehrzahl von Bildern angewandt, die eine von dem Beleuchtungswinkel abhängende Entzerrung beinhaltet.

Nach Anwendung der Bildkorrektur können die korrigierten Bilder aufsummiert oder anderweitig weiterverarbeitet werden.

Die Entzerrung eines Bildes wird durch ein Vektorfeld definiert sein, das feldpunktabhängige Verschiebungen für Pixel des Bildes definiert. Ein feldpunktabhängiger Defokusfehler, wie er beispielsweise bei der Bildfeldwölbungskorrektur oder bei der Astigmatismuskorrektur korrigiert werden soll, wird dabei berücksichtigt.

Die abhängigen Ansprüche definieren weitere Ausführungsbeispiele.

Bei den Vorrichtungen und Verfahren nach Ausführungsbeispielen kann eine Bildkorrektur in rechnerisch effizienter Weise ausgeführt werden, ohne dass die Bilder mit der jeweiligen Punktspreizfunktion ("point spread function", PSF) entfaltet werden müssen. Durch die Beleuchtung unter einer Mehrzahl von Beleuchtungswinkeln und Berücksichtigung der Beleuchtungswinkel bei der rechnerischen Verarbeitung der Bilder können die Probleme verringert werden, die herkömmlich mit Nullstellen von MTFs verbunden sind. Informationsverlust kann verringert werden, indem die unter mehreren Beleuchtungswinkeln erfassten Bilder kombiniert werden. Die Kombination kann durch Operationen wie eine Entzerrung und Addition ausgeführt werden, die rechnerisch effizient ausführbar sind und eine Echtzeitbedingung erfüllen können.

Eine Bildaufnahmevorrichtung nach einem Ausführungsbeispiel umfasst eine Beleuchtungseinrichtung, die steuerbar ist, um eine Mehrzahl von Beleuchtungswinkeln für eine Beleuchtung eines Objekts einzustellen. Die Bildaufnahmevorrichtung umfasst einen Detektor mit einem Bildsensor, der eingerichtet ist, um eine Mehrzahl von Bildern des Objekts für die Mehrzahl von Beleuchtungswinkeln zu erfassen. Die Bildaufnahmevorrichtung umfasst eine elektronische Auswerteeinrichtung zur Verarbeitung der Mehrzahl von Bildern, die mit dem Bildsensor gekoppelt ist. Die elektronische Auswerteeinrichtung ist eingerichtet, um auf jedes Bild der Mehrzahl von Bildern eine Bildkorrektur anzuwenden, die eine Entzerrung umfasst, wobei die Entzerrung von dem bei der Aufnahme des jeweiligen Bildes verwendeten Beleuchtungswinkel abhängt. Die elektronische Auswerteeinrichtung kann eingerichtet sein, um die durch die Bildkorrektur korrigierten Bilder zu kombinieren.

Die elektronische Auswerteeinrichtung kann eingerichtet sein, um durch die Entzerrung eine feldpunktabhängige Defokussierung zu korrigieren. Die feldpunktabhängige Defokussierung kann beispielsweise durch eine Bildfeldwölbung und/oder einen Astigmatismus eines optischen Systems der Bildaufnahmevorrichtung, beispielsweise der Beleuchtungseinrichtung, verursacht werden.

Ein die Entzerrung definierendes Vektorfeld kann sowohl von dem Beleuchtungswinkel bei Aufnahme des Bildes, das der Bildkorrektur unterzogen wird, als auch von der feldpunktabhängigen Defokussierung abhängen. Die feldpunktabhängige Defokussierung kann von dem Beleuchtungswinkel unabhängig sein. Das die Entzerrung definierende Vektorfeld kann effizient ermittelt werden, indem der Versatz von Punkten einer Objektebene bestimmt wird, der durch die feldpunktabhängige Defokussierung verursacht wird.

Die elektronische Auswerteeinrichtung kann eingerichtet sein, um durch die Entzerrung eine Bildfeldwölbung zu korrigieren.

Die Entzerrung kann von einer der Bildfeldwölbung zugeordneten Objektfeldwölbung abhängen. Die der Bildfeldwölbung zugeordnete Objektfeldwölbung kann für das optische System rechnerisch bestimmt werden, indem diejenige gewölbte Fläche ermittelt wird, die von dem optischen System der Bildaufnahmevorrichtung in eine Ebene des Bildsensors abgebildet wird.

Die Entzerrung, die auf ein Bild angewandt wird, kann von einem feldpunktabhängigen Versatz eines Punkts einer Objektebene abhängen, den der Punkt erfährt, wenn er unter dem Beleuchtungswinkel auf eine gewölbte Fläche, die von einem optischen System der Bildaufnahmevorrichtung auf eine Ebene des Bildsensors abgebildet wird, projiziert wird. Durch Bestimmung und Invertierung dieses Versatzes für eine Mehrzahl von Punkten der Objektebene kann ein Vektorfeld definiert werden, das zur Entzerrung des Bildes verwendet wird. Das die Entzerrung definierende Vektorfeld hängt nicht nur von der der Bildfeldwölbung zugeordneten Objektsfeldwölbung ab, sondern auch von dem Beleuchtungswinkel bei Aufnahme des jeweiligen Bildes.

Das die Entzerrung definierende Vektorfeld kann für jeden der Mehrzahl von Beleuchtungswinkeln nichtflüchtig in einem Speichermedium der Bildaufnahmevorrichtung gespeichert sein. Alternativ oder zusätzlich kann die elektronische Auswerteeinrichtung auch eingerichtet sein, um das die Entzerrung definierende Vektorfeld für jeden der Mehrzahl von Beleuchtungswinkeln rechnerisch zu ermitteln.

Die elektronische Auswerteeinrichtung kann eingerichtet sein, um durch die Entzerrung einen Astigmatismus zu korrigieren. Die Astigmatismuskorrektur kann alternativ oder zusätzlich zur Bildfeldwölbungskorrektur ausgeführt werden.

Die Entzerrung, die auf ein Bild angewandt wird, kann von einer Lage eines unter dem Beleuchtungswinkel einfallenden Strahls zu wenigstens zwei Ebenen des Astigmatismus abhängen. Jede der wenigstens zwei Ebenen des Astigmatismus kann durch einen Meridian einer Linse der Bildaufnahmevorrichtung und eine optische Achse definiert sein, wobei die Meridiane unterschiedlichen Fokuslagen zugeordnet sind.

Der Bildsensor kann mehrere Farbkanäle aufweisen. Die Entzerrung, die auf ein Bild angewandt wird, kann für die unterschiedlichen Farbkanäle unterschiedlich sein. Auf diese Weise können chromatische Aberrationen berücksichtigt werden. Beispielsweise können Farblängsfehler und/oder Farbquerfehler gleichzeitig mit einer Bildfeldwölbungskorrektur und/oder einer Astigmatismuskorrektur korrigiert werden.

Der Detektor der Bildaufnahmevorrichtung kann eine Detektor-Schärfentiefe aufweisen, die kleiner als eine Objektfeldwölbung entlang der optischen Achse ist. Der Detektor der Bildaufnahmevorrichtung kann eine Detektor-Schärfentiefe aufweisen, die kleiner als ein durch einen Astigmatismus hervorgerufene Defokussierung entlang der optischen Achse ist.

Wenn mit der Bildaufnahmevorrichtung andere optische Fehler korrigiert werden sollen, kann der Detektor der Bildaufnahmevorrichtung eine Detektor-Schärfentiefe aufweisen, die kleiner ist als die Summe der Defokussierungen entlang der optischen Achse, die durch die unterschiedlichen Abbildungsfehler verursacht werden. Beispielsweise kann der Detektor eine Detektor-Schärfentiefe aufweisen, die kleiner ist als die Summe eines durch Farblängsfehler verursachten Defokus, eines durch Bildfeldwölbung verursachten Defokus und eines durch Astigmatismus verursachten Defokus.

Für die Mehrzahl von Beleuchtungswinkeln kann jeweils Information über die anzuwendende Entzerrung nichtflüchtig in einem Speichermedium der Bildaufnahmevorrichtung gespeichert sein.

Die elektronische Auswerteeinrichtung kann eingerichtet sein, um die durch die Bildkorrektur korrigierten Bilder zu addieren, um ein Ergebnisbild zu errechnen.

Die elektronische Auswerteeinrichtung kann eingerichtet sein, um die Mehrzahl von Bildern nach der Bildkorrektur für eine Fourier-Ptychographie zu verwenden. Die elektronische Auswerteeinrichtung kann eingerichtet sein, um eine Phasen- und Amplitudenverteilung des Objekts abhängig von den durch die Bildkorrektur korrigierten Bildern zu errechnen. Die elektronische Auswerteeinrichtung kann eingerichtet sein, um ein Spektrum des Objekts im Ortsraum zu rekonstruieren und die Phasen- und Amplitudenverteilung des Objekts durch eine Fourier-Transformation zu bestimmen.

Die elektronische Auswerteeinrichtung kann eingerichtet sein, um aus der Mehrzahl von korrigierten Bildern nach der Bildkorrektur ein Phasenkontrastbild zu ermitteln.

Die Bildaufnahmevorrichtung kann zur automatischen Fokuseinstellung eingerichtet sein. Dazu kann eine Parallaxe bei Aufnahme des Objekts unter wenigstens zwei unterschiedlichen Beleuchtungswinkeln verwendet werden.

Die elektronische Auswerteeinrichtung kann eingerichtet sein, um die Bildkorrektur auf ein Bild anzuwenden, das für einen Beleuchtungswinkel erfasst wurde, während der Detektor ein weiteres Bild für einen weiteren Beleuchtungswinkel erfasst. Durch die Parallelisierung von Bildkorrektur und Aufnahme weiterer Bilder unter anderen Beleuchtungswinkeln kann die bis zur Bereitstellung des Ergebnisbildes benötigte Zeit weiter verringert werden.

Die Bildaufnahmevorrichtung kann ein Mikroskopsystem sein. Die Bilder können in einer Transmissionsanordnung erfasst werden. Die Bilder können in einer Reflexionsanordnung erfasst werden.

Ein Verfahren zur Bildaufnahme nach einem Ausführungsbeispiel umfasst ein Erfassen einer Mehrzahl von Bildern, wenn ein Objekt unter einer Mehrzahl von Beleuchtungswinkeln beleuchtet wird. Das Verfahren umfasst ein Verarbeiten der Mehrzahl von Bildern. Dabei wird eine Bildkorrektur auf jedes Bild der Mehrzahl von Bildern angewandt, wobei die Bildkorrektur eine Entzerrung umfasst, die von dem Beleuchtungswinkel bei der Aufnahme des jeweiligen Bildes abhängt. Die Mehrzahl von durch die Bildkorrektur korrigierten Bildern wird kombiniert.

Das Verfahren kann von der Bildaufnahmevorrichtung nach einem Ausführungsbeispiel automatisch ausgeführt werden.

Bei dem Verfahren kann durch die Entzerrung eine feldpunktabhängige Defokussierung korrigiert werden. Die feldpunktabhängige Defokussierung kann beispielsweise durch eine Bildfeldwölbung und/oder einen Astigmatismus eines optischen Systems der Bildaufnahmevorrichtung verursacht werden.

Bei dem Verfahren kann ein die Entzerrung definierendes Vektorfeld sowohl von dem Beleuchtungswinkel bei Aufnahme des Bildes, das der Bildkorrektur unterzogen wird, als auch von der feldpunktabhängigen Defokussierung abhängen. Die feldpunktabhängige Defokussierung kann von dem Beleuchtungswinkel unabhängig sein. Das die Entzerrung definierende Vektorfeld kann effizient ermittelt werden, indem der Versatz von Punkten einer Objektebene bestimmt wird, der durch die feldpunktabhängige Defokussierung verursacht wird.

Bei dem Verfahren kann durch die Entzerrung eine Bildfeldwölbung korrigiert werden.

Bei dem Verfahren kann die Entzerrung von einer der Bildfeldwölbung zugeordneten Objektfeldwölbung abhängen. Die der Bildfeldwölbung zugeordnete Objektfeldwölbung kann für das optische System rechnerisch bestimmt werden, indem diejenige gewölbte Fläche ermittelt wird, die von dem optischen System der Bildaufnahmevorrichtung in eine Ebene des Bildsensors abgebildet wird.

Bei dem Verfahren kann die Entzerrung, die auf ein Bild angewandt wird, von einem feldpunktabhängigen Versatz eines Punkts einer Objektebene abhängen, den der Punkt erfährt, wenn er unter dem Beleuchtungswinkel auf eine gewölbte Fläche, die von einem optischen System der Bildaufnahmevorrichtung auf eine Ebene des Bildsensors abgebildet wird, projiziert wird. Durch Bestimmung und Invertierung dieses Versatzes für eine Mehrzahl von Punkten der Objektebene kann ein Vektorfeld definiert werden, das zur Entzerrung des Bildes verwendet wird. Das die Entzerrung definierende Vektorfeld hängt nicht nur von der der Bildfeldwölbung zugeordneten Objektsfeldwölbung ab, sondern auch von dem Beleuchtungswinkel bei Aufnahme des jeweiligen Bildes.

Bei dem Verfahren kann das die Entzerrung definierende Vektorfeld für jeden der Mehrzahl von Beleuchtungswinkeln nichtflüchtig in einem Speichermedium der Bildaufnahmevorrichtung gespeichert sein und zur Bildkorrektur aus dem Speichermedium abgerufen werden. Alternativ oder zusätzlich kann bei dem Verfahren das die Entzerrung definierende Vektorfeld für jeden der Mehrzahl von Beleuchtungswinkeln rechnerisch ermittelt werden.

Bei dem Verfahren kann durch die Entzerrung einen Astigmatismus korrigiert werden. Die Astigmatismuskorrektur kann alternativ oder zusätzlich zur Bildfeldwölbungskorrektur ausgeführt werden.

Die Entzerrung, die bei dem Verfahren auf ein Bild angewandt wird, kann von einer Lage eines unter dem Beleuchtungswinkel einfallenden Strahls zu wenigstens zwei Ebenen des Astigmatismus abhängt. Jede der wenigstens zwei Ebenen des Astigmatismus kann durch einen Meridian einer Linse der Bildaufnahmevorrichtung und eine optische Achse definiert sein, wobei die Meridiane unterschiedlichen Fokuslagen zugeordnet sind.

Ein Bildsensor, mit dem die Mehrzahl von Bildern erfasst wird, kann mehrere Farbkanäle aufweisen. Die Entzerrung, die bei dem Verfahren auf ein Bild angewandt wird, kann für die unterschiedlichen Farbkanäle unterschiedlich sein. Auf diese Weise können chromatische Aberrationen berücksichtigt werden. Beispielsweise können Farblängsfehler oder Farbquerfehler gleichzeitig mit einer Bildfeldwölbungskorrektur und/oder einer Farblängsfehlerkorrektur korrigiert werden.

Der Detektor, mit dem die Mehrzahl von Bildern erfasst wird, kann eine Detektor-Schärfentiefe aufweisen, die größer als eine Objektfeldwölbung entlang der optischen Achse ist. Der Detektor kann eine Detektor-Schärfentiefe aufweisen, die größer als eine durch einen Astigmatismus hervorgerufene Defokussierung entlang der optischen Achse ist.

Wenn mit der Bildaufnahmevorrichtung andere optische Fehler korrigiert werden sollen, kann der Detektor eine Detektor-Schärfentiefe aufweisen, die kleiner ist als die Summe der Defokussierungen entlang der optischen Achse, die durch die unterschiedlichen Abbildungsfehler verursacht werden. Beispielsweise kann der Detektor eine Detektor-Schärfentiefe aufweisen, die kleiner ist als die Summe eines durch Farblängsfehler verursachten Defokus, eines durch Bildfeldwölbung verursachten Defokus und eines durch Astigmatismus verursachten Defokus.

Für die Mehrzahl von Beleuchtungswinkeln kann jeweils Information über die anzuwendende Entzerrung nichtflüchtig in einem Speichermedium der Bildaufnahmevorrichtung gespeichert sein und zur Bildkorrektur aus dem Speichermedium abgerufen werden.

Bei dem Verfahren kann eine Entzerrung eines Bildes ein Runden eines feldpunktabhängigen Vektors auf einen ganzzahligen Pixelabstand umfassen.

Bei dem Verfahren kann eine Entzerrung eines Bildes eine Interpolation zwischen mehreren Pixelwerten umfassen, wenn eine feldpunktabhängige Verschiebung, die auf ein Pixel angewandt wird, nicht gleich einem ganzzahligen Pixelabstand des Bildsensors ist.

Das Kombinieren der Mehrzahl von Bildern nach der Bildkorrektur kann ein Addieren der durch die Bildkorrektur korrigierten Bilder umfassen, um ein Ergebnisbild zu errechnen.

Bei dem Verfahren kann die Mehrzahl von Bildern nach der Bildkorrektur für eine Fourier-Ptychographie verwendet werden. Es können eine Phasen- und Amplitudenverteilung des Objekts errechnet werden. Ein Spektrum des Objekts kann im Ortsraum rekonstruiert werden, wobei die Phasen- und Amplitudenverteilung des Objekts durch eine Fourier-Transformation bestimmt werden kann.

Bei dem Verfahren kann aus der Mehrzahl von korrigierten Bildern nach der Bildkorrektur ein Phasenkontrastbild ermittelt werden.

Das Verfahren kann eine automatische Fokuseinstellung umfassen. Dazu kann eine Parallaxe bei Aufnahme des Objekts unter wenigstens zwei unterschiedlichen Beleuchtungswinkeln verwendet werden.

Bei dem Verfahren kann die Bildkorrektur auf ein Bild angewandt werden, das für einen Beleuchtungswinkel erfasst wurde, während ein weiteres Bild für einen weiteren Beleuchtungswinkel erfasst wird. Durch die Parallelisierung von Bildkorrektur und Aufnahme weiterer Bilder unter anderen Beleuchtungswinkeln kann die bis zur Bereitstellung des Ergebnisbildes benötigte Zeit weiter verringert werden.

Vorrichtungen und Verfahren nach Ausführungsbeispielen erlauben die Verwendung kostengünstiger Optiken. Die Verarbeitung der aufgenommenen Bilder kann schnell, auflösungserhaltend und artefaktreduzierend erfolgen. Feldpunktabhängige Korrekturen von Defokussierungsfehlern, die durch eine Bildfeldwölbung und/oder eine Astigmatismus hervorgerufen werden, sind möglich.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

KURZE BESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

FIG. 1 ist eine schematische Darstellung einer Bildaufnahmevorrichtung nach einem Ausführungsbeispiel.

FIG. 2 ist ein Flussdiagramm eines Verfahrens nach einem Ausführungsbeispiel.

FIG. 3 veranschaulicht die Verarbeitung einer Mehrzahl von Bildern bei Vorrichtungen und Verfahren nach Ausführungsbeispielen.

FIG. 4 veranschaulicht die Anwendung einer Bildaufnahmevorrichtung und eines Verfahrens nach Ausführungsbeispielen zur Bildfeldwölbungskorrektur.

FIG. 5 veranschaulicht die Anwendung einer Bildaufnahmevorrichtung und eines Verfahrens nach Ausführungsbeispielen zur Bildfeldwölbungskorrektur, wobei eine der Bildfeldwölbung zugeordnete Objektfeldwölbung ermittelt wird.

FIG. 6 veranschaulicht die Abhängigkeit der Entzerrung von dem Beleuchtungswinkel und einer feldpunktabhängigen Defokussierung.

FIG. 7 und FIG. 8 illustrieren eine Ermittlung einer bei der Bildfeldwölbungskorrektur invertierten feldpunktabhängigen Verschiebung.

FIG. 9 ist ein Flussdiagramm eines Verfahrens nach einem Ausführungsbeispiel zur Bildfeldwölbungskorrektur.

FIG. 10 veranschaulicht die Anwendung einer Bildaufnahmevorrichtung und eines Verfahrens nach Ausführungsbeispielen zur Astigmatismuskorrektur.

FIG. 11 zeigt ein eine Entzerrung definierendes Vektorfeld zur Bildfeldwölbungskorrektur und/oder Astigmatismuskorrektur.

FIG. 12 ist ein Blockdiagramm einer Bildaufnahmevorrichtung nach einem Ausführungsbeispiel.

FIG. 13 veranschaulicht unterschiedliche Techniken zur Entzerrung eines Bildes.

## DETAILLIERTE BESCHREIBUNG VON AUSFÜHRUNGSBEISPIELEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Darstellungen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und ihr Zweck dem Fachmann verständlich wird.

In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein.

Nachfolgend werden Techniken beschrieben, mit denen Abbildungsfehler, die durch einen Defokus einer Beleuchtung eines Objekts hervorgerufen werden, rechnerisch korrigiert werden können. Unter einer "Korrektur" und einem "Korrigieren" von Abbildungsfehler werden dabei Maßnahmen verstanden, mit denen die Güte eines erzeugten Ergebnisbildes verbessert und wenigstens bestimmte Abbildungsfehler, wie beispielsweise durch Bildfeldwölbung und/oder Astigmatismus hervorgerufene Defokusfehler, verringert werden können.

Wie nachfolgend ausführlicher beschrieben wird, werden bei Ausführungsbeispielen der Erfindung sequentiell mehrere Bilder eines Objekts aufgenommen. Ein Beleuchtungswinkel für eine Beleuchtung des Objekts wird zur Aufnahme der mehreren Bilder auf unterschiedliche Werte eingestellt. Auf jedes der Bilder wird eine Bildkorrektur angewandt. Die Bildkorrektur kann eine Entzerrung umfassen, bei der Pixel in der Bildebene feldpunktabhängig verschoben werden. Durch die Entzerrung kann eine feldpunktabhängige Defokussierung korrigiert werden. Eine derartige feldpunktabhängige Defokussierung kann beispielsweise durch Bildfeldwölbung und/oder Astigmatismus verursacht werden.

Die rechnerische Verarbeitung der erfassten Bilder, die die Bildkorrektur beinhaltet, kann auf in einem Speichermedium einer Bildaufnahmevorrichtung nichtflüchtig gespeicherten Daten beruhen. Die Daten können für unterschiedliche Beleuchtungswinkel die jeweils anzuwendende Entzerrung umfassen. Alternativ oder zusätzlich können die Daten Informationen enthalten, aus denen eine elektronische Auswerteeinrichtung die anzuwendende Entzerrung ermittelt, beispielsweise durch Berechnung eines die Entzerrung definierenden Vektorfeldes.

Die Daten, die im Betrieb der Bildaufnahmevorrichtung zur rechnerischen Bildkorrektur verwendet werden, können vorab rechnerisch bestimmt und in dem Speichermedium gespeichert werden. Die Daten können auch durch eine Kalibrierungsmessung an der Bildaufnahmevorrichtung mit Referenzobjekten erzeugt und nichtflüchtig gespeichert werden.

Durch Kombination der mehreren Bilder nach der Bildkorrektur kann die elektronische Auswerteeinrichtung automatisch ein Ergebnisbild erzeugen, das die Information der mehreren Bilder enthält. Die Erzeugung des Ergebnisbildes kann so erfolgen, dass sie eine Entzerrung und Aufsummierung von Bildern enthält, ohne dass eines der Bilder mit seiner Punktspreizfunktion (PSF) entfaltet werden muss.

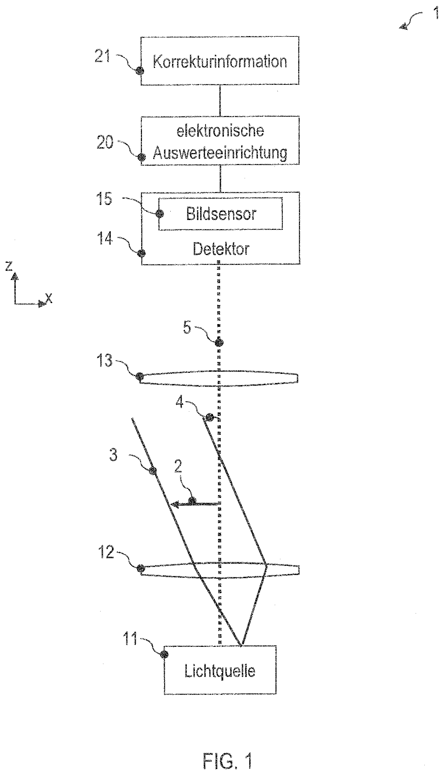

FIG. 1 ist eine schematische Darstellung einer Bildaufnahmevorrichtung 1 nach einem Ausführungsbeispiel. Die Bildaufnahmevorrichtung 1 kann zur automatischen Ausführung von Verfahren nach Ausführungsbeispielen ausgestaltet sei. Die Bildaufnahmevorrichtung 1 kann ein Mikroskopsystem sein oder kann ein Mikroskop umfassen, das mit einer noch ausführlicher beschriebenen steuerbaren Beleuchtungseinrichtung, einer Kamera mit einem Bildsensor und einer elektronischen Auswerteeinrichtung zur Bildkorrektur versehen ist.

Die Bildaufnahmevorrichtung 1 umfasst eine Beleuchtungseinrichtung mit einer Lichtquelle 11. Eine Kondensor-Linse 12 kann in an sich bekannte Weise das von der Lichtquelle 11 abgegeben Licht auf ein abzubildendes Objekt 2 lenken. Die Beleuchtungseinrichtung ist so ausgestaltet, dass Licht unter einer Mehrzahl unterschiedlicher Beleuchtungswinkel 4 auf das Objekt 2 eingestrahlt werden kann. Dazu kann beispielsweise die Lichtquelle 11 eine Leuchtdioden (LED)-Anordnung mit mehreren LEDs umfassen, die einzeln ansteuerbar sein können. Die LED-Anordnung kann eine LED-Ringanordnung sein. Alternativ kann ein steuerbares Element in einer Zwischenbildebene, in die eine herkömmliche Lichtquelle vergrößert abgebildet wird, angeordnet sein, um unterschiedliche Beleuchtungswinkel bereitzustellen. Das steuerbare Element kann eine bewegliche Lochblende, eine Mikrospiegelanordnung, eine Flüssigkeitskristallmatrix oder einen räumlichen Lichtmodulator umfassen.

Die Beleuchtungseinrichtung kann so eingerichtet sein, dass der Betrag des Beleuchtungswinkels 4, der mit einer optischen Achse 5 eingeschlossen wird, verändert werden kann. Die Beleuchtungseinrichtung kann so eingerichtet sein, dass eine Richtung des Strahls 3, mit dem das Objekt unter dem Beleuchtungswinkel 4 beleuchtet werden kann, auch in Polarrichtung um die optische Achse 5 herumbewegt werden kann.

Ein Detektor 14 der Bildaufnahmevorrichtung 1 erfasst für jeden von mehreren Beleuchtungswinkeln, unter denen das Objekt 2 beleuchtet wird, jeweils mindestens ein Bild des Objekts 2. Ein Bildsensor 15 des Detektors 14 kann beispielsweise als CCD-Sensor, CMOS-Sensor oder als ein TDI ("time delay and integration")-CCD-Sensor ausgestaltet sein. Eine Abbildungsoptik, beispielsweise ein nur schematisch dargestelltes Mikroskopobjektiv 13, kann ein vergrößertes Abbild des Objekts 2 an dem Bildsensor 15 erzeugen. Der Bildsensor 15 kann eine ebene Fläche zur Bildaufnahme umfassen.

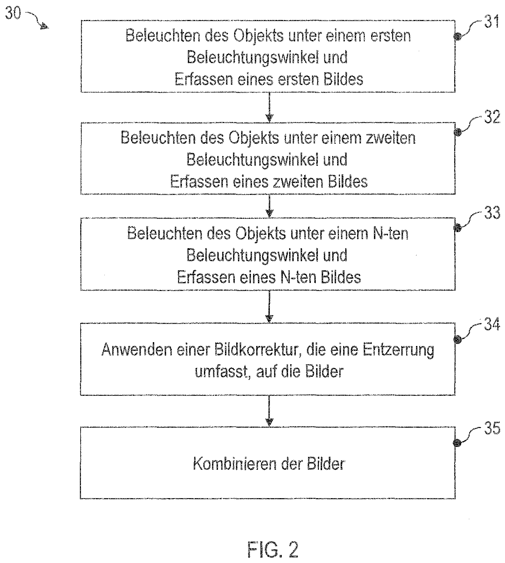

Die Bildaufnahmevorrichtung 1 umfasst eine elektronische Auswerteeinrichtung 20. Die elektronische Auswerteeinrichtung 20 verarbeitet die Mehrzahl von Bildern weiter, die von dem Objekt für die Mehrzahl von Beleuchtungswinkeln erfasst wurden. Die elektronische Auswerteeinrichtung 20 wendet eine Bildkorrektur auf die erfassten Bilder an. Wie unter Bezugnahme auf FIG. 2 bis FIG. 13 näher beschrieben wird, beinhaltet die Bildkorrektur jeweils eine Entzerrung, die von dem Beleuchtungswinkel bei Aufnahme des Bildes abhängt. Die Entzerrung zur Bildkorrektur kann den feldpunktabhängigen Versatz, der durch Bildfeldwölbung oder Astigmatismus oder einen anderen feldpunktabhängigen Defokusfehler hervorgerufen wird, reduzieren. Dazu kann die feldpunktabhängige Verschiebung, mit der Pixel in der Bildebene verschoben werden, abhängig von einer feldpunktabhängigen Defokussierung festgelegt sein. Unterschiedliche Farbkanäle eines Bildes können mit unterschiedlichen Entzerrungen korrigiert werden, um ein korrigiertes Bild zu erzeugen.

Die Bildaufnahmevorrichtung 1 umfasst ein Speichermedium mit Korrekturinformation 21. Die elektronische Auswerteeinrichtung 20 ist mit dem Speichermedium gekoppelt oder kann dieses umfassen. Die elektronische Auswerteeinrichtung 20 kann die für jeden Beleuchtungswinkel jeweils anzuwendende Bildkorrektur abhängig von der Korrekturinformation in dem Speichermedium ermitteln.

Die korrigierten Bilder, die jeweils einem von mehreren Beleuchtungswinkeln zugeordnet sind, können auf unterschiedliche Weise kombiniert werden. Beispielsweise können die Bilder nach der Bildkorrektur aufaddiert werden. Die Bilder können für eine Rekonstruktion von Amplituden- und Phaseninformation des Objekts 2 in einer Fourier-Ptychographie verwendet werden. Die korrigierten Bilder können zum Ermitteln einer Fokuslage oder anderweitig zur automatischen Einstellung der Bildaufnahmevorrichtung 1 verwendet werden. Die entsprechende Verarbeitung kann von der elektronischen Auswerteeinrichtung 20 automatisch ausgeführt werden.

Da die elektronische Auswerteeinrichtung 20 eine Bildkorrektur durch eine Entzerrung der Bilder ausführen kann, ist die Verarbeitung echtzeitfähig. Die Bildaufnahmevorrichtung 1 kann eine Benutzerschnittstelle mit einer optischen Ausgabeeinrichtung umfassen, auf der die elektronische Auswerteeinrichtung 20 im Betrieb das erzeugte Ergebnisbild ausgeben kann. Eine rechnerisch komplizierte Entfaltung von Einzelbildern mit ihrer Punktspreizfunktion ist nicht mehr unbedingt erforderlich. Durch Kombination von Information aus Bildern, die bei Beleuchtung unter mehreren Beleuchtungswinkeln erfasst wurden, kann auch Information über diejenigen Ortsraumfrequenzen des Objekts 2 gewonnen werden, bei denen die MTF für einen der Beleuchtungswinkel eine Nullstelle aufweist.

Die Funktionsweise der Bildaufnahmevorrichtung nach Ausführungsbeispielen wird unter Bezugnahme auf FIG. 2 bis FIG. 13 näher beschrieben.

FIG. 2 ist ein Flussdiagramm eines Verfahrens 30 nach einem Ausführungsbeispiel. Das Verfahren kann von der Bildaufnahmevorrichtung 1 automatisch ausgeführt werden.

Bei Schritt 31 wird das Objekt unter einem ersten Beleuchtungswinkel beleuchtet. Die Beleuchtungseinrichtung kann beispielsweise von der elektronischen Auswerteeinrichtung 20 so angesteuert werden, dass das Objekt unter dem ersten Beleuchtungswinkel beleuchtet wird. Der Bildsensor 15 erfasst ein erstes Bild.

Bei Schritt 32 wird das Objekt unter einem zweiten Beleuchtungswinkel beleuchtet. Der zweite Beleuchtungswinkel kann von dem ersten Beleuchtungswinkel verschieden sein. Dazu kann die Beleuchtungseinrichtung entsprechend angesteuert werden. Der Bildsensor 15 erfasst ein zweites Bild.

Die sequentielle Beleuchtung des Objekts unter unterschiedlichen Beleuchtungswinkeln und Bildaufnahme kann wiederholt werden.

Bei Schritt 33 wird das Objekt unter einem N-ten Beleuchtungswinkel beleuchtet, wobei N eine ganze Zahl > 1 ist. Dazu kann die Beleuchtungseinrichtung entsprechend angesteuert werden. Der Bildsensor 15 erfasst ein N-tes Bild.

Bei Schritt 34 wird auf jedes der N Bilder eine Bildkorrektur angewandt. Die Bildkorrektur umfasst eine Entzerrung. Die Entzerrung kann durch ein Vektorfeld definiert sein, nach dem Pixel ortsabhängig verschoben und/oder interpoliert werden können. Das Anwenden der Bildkorrektur kann zeitlich überlappend mit der Erfassung weiterer Bilder erfolgen. Beispielsweise kann durch Bildkorrektur des ersten Bildes ein korrigiertes erstes Bild ermittelt werden, während gleichzeitig bei Schritt 32 oder 33 eine nachfolgende Bildaufnahme stattfindet.

Bei Schritt 35 können die für unterschiedliche Beleuchtungswinkel der Objektbeleuchtung erfassten Bilder rechnerisch kombiniert werden. Dazu können die Bilder addiert werden. Komplexere Verarbeitungen sind möglich. Beispielsweise kann Phaseninformation des Objekts 2 rechnerisch aus den mehreren Bildern bestimmt werden. Die durch die Bildkorrektur korrigierten Bilder können für einen Fourier-Ptychographie-Algorithmus verwendet werden.

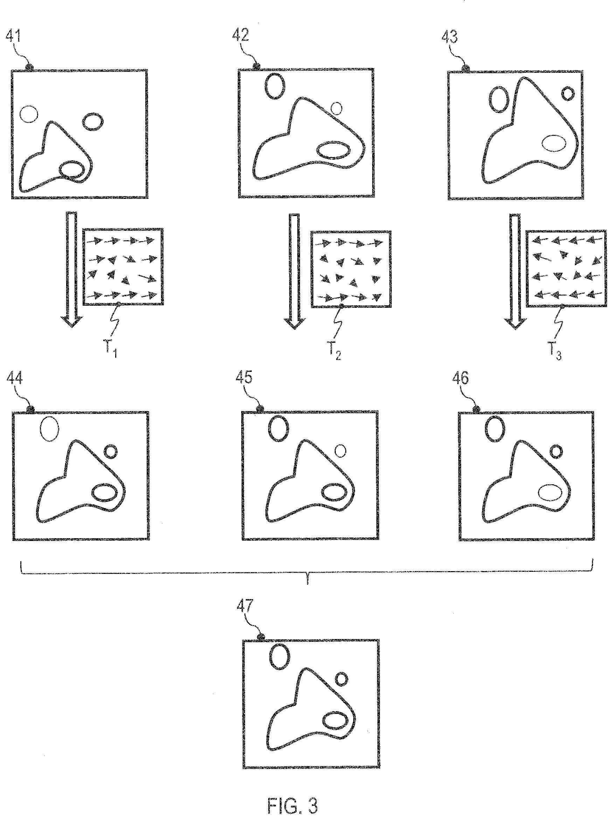

FIG. 3 ist eine schematische Darstellung zur weiteren Erläuterung der Arbeitsweise der Bildaufnahmevorrichtung 1.

Ein erstes Bild 41 wird bei Beleuchtung des Objekts unter einem ersten Beleuchtungswinkel erfasst. Ein zweites Bild 42 wird bei Beleuchtung des Objekts unter einem zweiten Beleuchtungswinkel erfasst. Ein drittes Bild 43 wird bei Beleuchtung des Objekts unter einem dritten Beleuchtungswinkel erfasst.

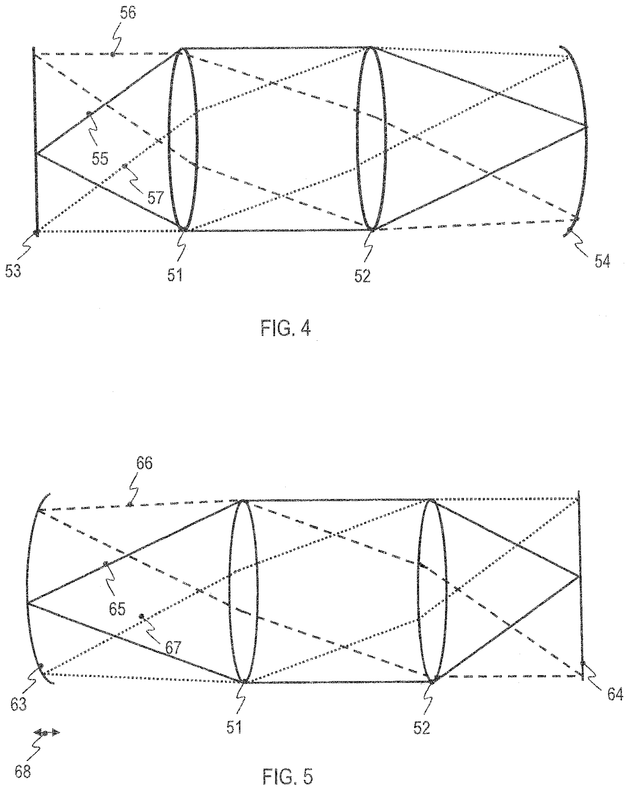

Durch eine Transformation $T_1$ entzerrt die elektronische Auswerteeinrichtung 20 das erste Bild 41, um ein korrigiertes erstes Bild 44 zu erzeugen. Die Transformation $T_1$ kann eine feldpunktabhängige Verschiebung von Pixeln in der Bildebene beinhalten. Pixel des ersten Bildes 44 können gemäß der Transformation $T_1$ interpoliert werden. Die Transformation $T_1$ kann eine lineare Abbildung von Pixeln des aufgenommenen ersten Bildes 41 in das korrigierte erste Bild 44 beinhalten, mit der eine durch feldpunktabhängige Defokussierung hervorgerufene Verzerrung wieder korrigiert werden kann, wie anhand von FIG. 4 bis FIG. 13 noch ausführlicher beschrieben wird.

Durch eine Transformation $T_2$ entzerrt die elektronische Auswerteeinrichtung 20 das zweite Bild 42, um ein korrigiertes zweites Bild 45 zu erzeugen. Die Transformation $T_2$ kann eine feldpunktabhängige Verschiebung von Pixeln in der Bildebene beinhalten. Pixel des zweiten Bildes 45 können gemäß der Transformation $T_2$ interpoliert werden. Die Transformation $T_2$ kann eine lineare Abbildung von Pixeln des aufgenommenen zweiten Bildes 42 in das korrigierte zweite Bild 45 beinhalten, mit der eine durch feldpunktabhängige Defokussierung hervorgerufene Verzerrung wieder korrigiert werden kann, wie anhand von FIG. 4 bis FIG. 13 noch ausführlicher beschrieben wird. Die zweite Transformation $T_2$ ist aufgrund der Beleuchtungswinkelabhängigkeit der Bildkorrektur von der ersten Transformation $T_1$ verschieden.

Durch eine Transformation $T_3$ entzerrt die elektronische Auswerteeinrichtung 20 das dritte Bild 43, um ein korrigiertes drittes Bild 46 zu erzeugen. Die Transformation $T_3$ kann eine feldpunktabhängige Verschiebung von Pixeln in der Bildebene beinhalten. Pixel des dritten Bildes 46 können gemäß der Transformation $T_3$ interpoliert werden. Die Transformation $T_3$ kann eine lineare Abbildung von Pixeln des aufgenommenen dritten Bildes 43 in das korrigierte dritte Bild 46 beinhalten, mit der eine durch feldpunktabhängige Defokussierung hervorgerufene Verzerrung wieder korrigiert werden kann, wie anhand von FIG. 4 bis FIG. 13 noch ausführlicher beschrieben wird. Die dritte Transformation $T_3$ ist aufgrund der Beleuchtungswinkelabhängigkeit der Bildkorrektur von der ersten Transformation $T_1$ und der zweiten Transformation $T_2$ verschieden.

Die korrigierten Bilder 44-46 können miteinander kombiniert werden. Beispielsweise kann ein Ergebnisbild 47 durch Aufaddieren der korrigierten Bilder 44-46 ermittelt werden. Das Aufaddieren kann für eine Mittelung der korrigierten Bilder 44-46 verwendet werden.

Aus den korrigierten Bildern 44-46 können alternativ oder zusätzlich auch Phasen- und/oder Amplitudeninformationen des abgebildeten Objekts ermittelt werden. Es kann eine automatische rechnerische Fokussierung auf das Objekt ausgeführt werden. Dazu kann beispielsweise aus einer Parallaxe, die für unterschiedliche Beleuchtungswinkel bestimmt wird, der Abstand des Objekts und seine Lage relativ zu einer Fokusebene des Detektors 14 ermittelt werden.

Wie unter Bezugnahme auf FIG. 4 bis FIG. 13 näher beschrieben wird, können durch Bildaufnahmevorrichtungen und Verfahren nach Ausführungsbeispielen Abbildungsfehler korrigiert werden, die durch eine Bildfeldwölbung und/oder einen Astigmatismus hervorgerufen werden. Dazu kann eine Entzerrung so definiert werden, dass ein Versatz eines Objektpunkts in den Richtungen senkrecht zur optischen Achse 5, die durch eine Defokussierung entlang der optischen Achse 5 verursacht wird, wieder rechnerisch kompensiert wird.

FIG. 4 und FIG. 5 veranschaulichen die Bildfeldwölbungskorrektur bei Vorrichtungen und Verfahren nach Ausführungsbeispielen. FIG. 4 und FIG. 5 zeigen schematisch ein optisches System der Bildaufnahmevorrichtung, das mehrere Linsen 51, 52 zur Abbildung eines Objekts auf einen Bildsensor umfasst. Eine ebene Fläche 53 eines Objekts kann von dem optischen System aufgrund von Abbildungsfehlern in eine gewölbte Fläche 54 abgebildet werden. FIG. 4 zeigt schematisch Strahlengänge 55-57 zur Erläuterung der Bildfeldwölbung.

Bei Verwendung eines Bildsensors, der eine ebene Fläche zur Bildaufnahme aufweist, führt die Wölbung der Fläche 54 zu Verzeichnungen des Objekts.

Um derartige Verzeichnungen zu kompensieren, kann die Entzerrung als eine feldpunktabhängige Korrektur bestimmt werden, die bei der Rekonstruktion des Objekts aus den erfassten Bildern verwendet wird. Der Bildfeldwölbung ist eine Objektfeldwölbung zugeordnet, die festlegt, um welchen Versatz senkrecht zur optischen Achse ein Feldpunkt des Objektfeldes verschoben erscheint. Dieser Versatz kann durch die Entzerrung wieder rechnerisch kompensiert werden, wie unter Bezugnahme auf FIG. 5 bis FIG. 8 näher erläutert wird.

FIG. 5 veranschaulicht die der Bildfeldwölbung zugeordnete Objektfeldwölbung. Aufgrund von Abbildungsfehlern wird eine gewölbte Fläche 63 vom optischen System der Bildaufnahmevorrichtung in eine ebene Fläche 64 abgebildet, die die sensitive Ebene des Bildsensors 15 darstellt. Die gewölbte Fläche 63 kann in an sich bekannter Weise rechnerisch ermittelt werden. Dazu können die optischen Eigenschaften des optischen Systems simuliert werden, um die gewölbte Fläche 63 zu bestimmen, die in die ebene Fläche 64 des Bildsensors 15 abgebildet wird. Es können alternativ oder zusätzlich auch Messungen an Referenzobjekten vorgenommen werden, um die Entzerrung zu bestimmen, mit der der Versatz korrigiert werden kann, der durch die z-Defokussierung aufgrund der Krümmung der gewölbten Fläche 63 verursacht wird. Die Information über die gewölbte Fläche 63 muss nicht bei der Bildaufnahme und -verarbeitung bestimmt werden, sondern kann vorab ermittelt werden und später bei der Bildverarbeitung verwendet werden.

Wie beschrieben werden bei Vorrichtungen und Verfahren nach Ausführungsbeispielen Bilder des Objekts für eine Beleuchtung unter einer Mehrzahl von Beleuchtungswinken erfasst. Für jeden der Beleuchtungswinkel ergibt sich ein feldpunktabhängiger Versatz durch die Krümmung der gewölbten Fläche 63, der rechnerisch kompensiert wird. Eine Detektor-Schärfentiefe des Detektors ist dabei größer als die maximale Defokussierung entlang der optischen Achse 5, die durch die Objektfeldwölbung 68 entlang der optischen Achse bestimmt ist.

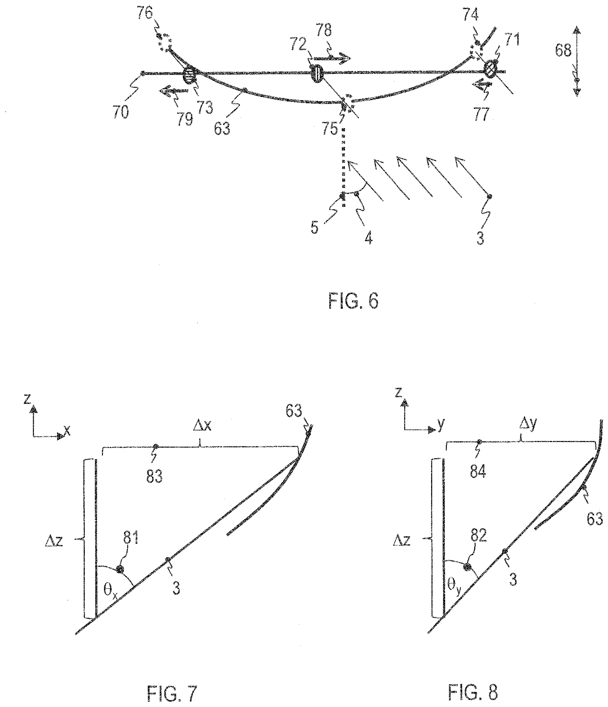

FIG. 6 veranschaulicht die Entstehung eines Versatzes in der Ebene senkrecht zur optischen Achse, der bei Vorrichtungen und Verfahren nach Ausführungsbeispielen korrigiert wird. Mehrere Punkte 71-73 eines Objektsfelds sind in einer Ebene 70 angeordnet. Die Bildfeldwölbung bewirkt, dass die Punkte 71-73 nicht an ihren wirklichen Positionen, sondern in der Bildebene versetzt erscheinen. Der Versatz kann durch Projektion der Punkte 71-73 auf die gewölbte Fläche 63 bestimmt werden, die durch das optische System in die Ebene 64 des Bildsensors 15 abgebildet wird.

Beispielhaft dargestellt ist die Beleuchtung des Objekts unter einem Beleuchtungswinkel 4. Das Objekt wird von einem Parallelstrahl 3 beleuchtet, der einen Winkel mit der optischen Achse 5 einschließen kann. Durch die Bildfeldwölbung und der der Bildfeldwölbung zugeordneten Objektfeldwölbung erscheint ein erster Punkt 71 des Objektfeldes im Bild nicht an seiner tatsächlichen Position, sondern an einer Position, die durch die Projektion 74 des ersten Punktes 71 entlang des unter dem Beleuchtungswinkel 4 einfallenden Strahls 3 auf die gewölbte Fläche 63 festgelegt ist. Dies führt zu einem Versatz 77 bei der Bildaufnahme. Der Versatz 77 kann bei der Bildkorrektur korrigiert werden. Dazu kann eine Entzerrung mit dem Inversen auf das entsprechende Pixel des Bildes angewandt werden, mit der der Versatz 77 korrigiert wird.

Durch die Bildfeldwölbung und der der Bildfeldwölbung zugeordneten Objektfeldwölbung erscheint ein zweiter Punkt 72 im Bild nicht an seiner tatsächlichen Position, sondern an einer Position, die durch die Projektion 75 des zweiten Punktes 72 entlang des unter dem Beleuchtungswinkel 4 einfallenden Strahls 3 auf die gewölbte Fläche 63 festgelegt ist. Dies führt zu einem Versatz 78 bei der Bildaufnahme.

Durch die Bildfeldwölbung und der der Bildfeldwölbung zugeordneten Objektfeldwölbung erscheint ein dritter Punkt 73 im Bild nicht an seiner tatsächlichen Position, sondern an einer Position, die durch die Projektion 76 des dritten Punktes 73 entlang des unter dem Beleuchtungswinkel 4 einfallenden Strahls 3 auf die gewölbte Fläche 63 festgelegt ist. Dies führt zu einem Versatz 79 bei der Bildaufnahme.

Der Versatz 77-79, der für eine Mehrzahl von Punkten der Ebene 70 rechnerisch bestimmt werden kann, kann invertiert werden. Auf diese Weise kann ein die Entzerrung definierendes Vektorfeld bestimmt werden, das auf das Bild zur Bildkorrektur angewandt wird.

Während FIG. 6 nur einen Schnitt durch die gewölbte Fläche 63 zeigt, kann die Wölbung in mehr als einer Richtung existieren. Die Krümmungsradien entlang der zur optischen Achse orthogonalen x- und y-Richtungen können unterschiedlich sein. Der Versatz 77-79, der durch Projektion von Punkten eines Objektfeldes 70 auf die gewölbte Fläche 63 entlang der durch den Beleuchtungswinkel 4 definierten Strahlrichtung 3 ermittelt wird, kann somit jeweils ein zweidimensionaler Vektor sein. Richtung und Amplitude des Versatzes können feldpunktabhängig variieren und sind jeweils von dem Beleuchtungswinkel abhängig. Entsprechend definiert die Entzerrung eine Transformation, die feldpunktabhängig ist und die durch den feldpunktabhängigen Defokus in Kombination mit dem Beleuchtungswinkel definiert ist.

FIG. 7 und FIG. 8 veranschaulichen die Bestimmung des zweidimensionalen Versatzes, der mit der Entzerrung korrigiert wird. Aufgrund der Bildfeldwölbung weist ein Punkt des Objektfeldes um einen z-Defokus $\Delta z$ auf. Der Beleuchtungswinkel ist so eingestellt, dass der einfallende Strahl 3 einen mit $\theta_x$ bezeichneten Winkel 81 mit der y-z-Ebene einschließt. Der Beleuchtungswinkel ist so eingestellt, dass der einfallende Strahl 3 einen mit $\theta_y$ bezeichneten Winkel 82 mit der x-z-Ebene einschließt. Der laterale Versatz 83, 84, der bei der Rekonstruktion des Objekts wieder berücksichtigt wird, kann bestimmt werden als

$$\Delta x = \tan(\theta_x) \cdot \Delta z(x,y) \qquad\qquad (1)$$

in der x-Richtung und

$$\Delta y = \tan(\theta_y) \cdot \Delta z(x,y) \qquad\qquad (2)$$

in der y-Richtung. Die Defokussierung $\Delta z(x,y)$ ist dabei feldpunktabhängig. Bei Rekonstruktion des Objekts kann auf jedes Bild eine von dem Beleuchtungswinkel und der feldpunktabhängigen Defokussierung abhängige Entzerrung angewendet werden, mit der diese Verzerrung wenigstens korrigiert wird.

Bei chromatischer Aberration kann die Objektfeldwölbung für unterschiedliche Wellenlängen unterschiedlich sein. Die beschriebene Verarbeitung kann in diesem Fall für jede von mehreren Wellenlängen, die beispielsweise die Schwerpunktwellenlängen der mehreren Farbkanäle des Bildsensors 15 sein können, ausgeführt werden. Das Bild kann in jedem der Farbkanäle mit einer Entzerrung korrigiert werden, die von dem Beleuchtungswinkel und der feldpunktabhängigen Defokussierung bei der Schwerpunktwellenlänge des Farbkanals abhängt.

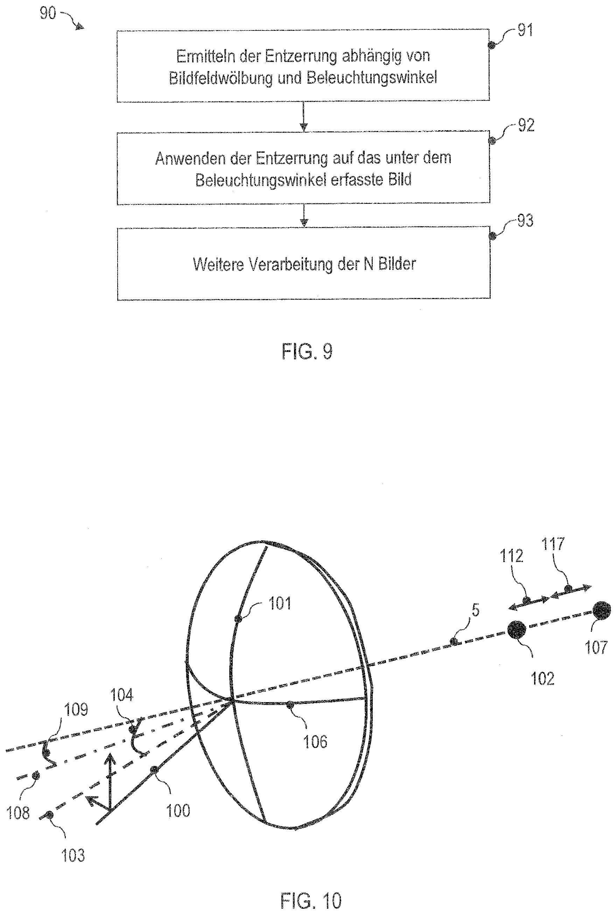

FIG. 9 ist ein Flussdiagramm eines Verfahrens 90 zur Bildfeldwölbungskorrektur. Das Verfahren kann von der elektronischen Auswerteeinrichtung 20 automatisch ausgeführt werden.

Bei Schritt 91 kann ermittelt werden, welche Transformation auf das Bild zur Entzerrung angewendet werden soll. Die Entzerrung hängt vom Beleuchtungswinkel bei der Aufnahme des Bildes ab. Die Entzerrung kann beispielsweise wie unter Bezugnahme auf FIG. 3 bis FIG. 9 beschrieben von der feldpunktabhängigen Defokussierung und dem Beleuchtungswinkel abhängen.

Die Entzerrung kann auf unterschiedliche Weise ermittelt werden. Bei einer Ausgestaltung kann Information über die Bildfeldwölbung oder der dieser zugeordneten Objektfeldwölbung in einem Speichermedium der Bildaufnahmevorrichtung nichtflüchtig gespeichert sein. Die elektronische Auswerteeinrichtung kann die Entzerrung dann für jeden der Beleuchtungswinkel berechnen. Bei einer weiteren Ausgestaltung kann die Entzerrung selbst bereits kennfeldbasiert gespeichert sein. Beispielsweise kann für jeden der Mehrzahl von Beleuchtungswinkeln eine lineare Abbildung nichtflüchtig in der Bildaufnahmevorrichtung gespeichert sein, mit der die korrigierten Bilder aus den erfassten Bildern berechnet werden. Die lineare Abbildung kann beispielsweise in Form einer Matrix gespeichert sein, die eine Abbildung eines Vektors, der die Pixelwerte des aufgenommenen Bildes enthält, in einen Vektor, der die Pixelwerte des korrigierten Bildes enthält, definiert. Die lineare Abbildung kann jeweils von der feldpunktabhängigen Defokussierung und dem Beleuchtungswinkel abhängen.

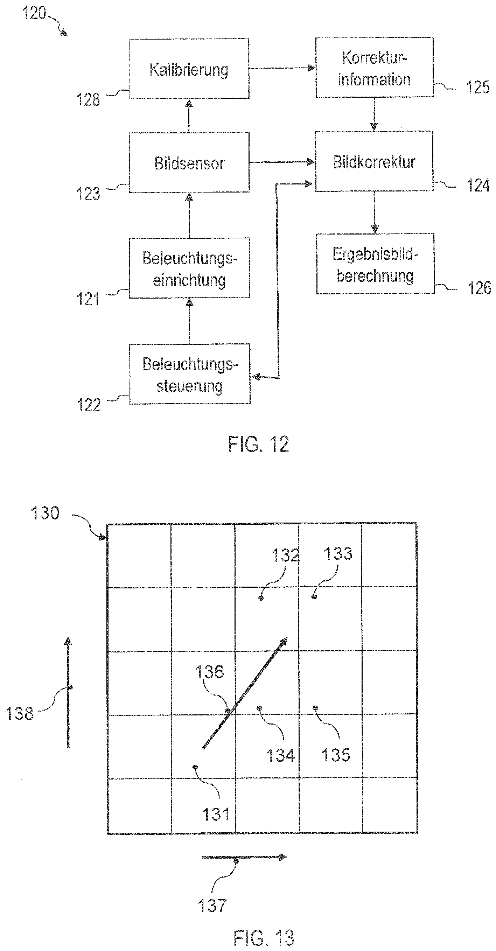

Bei Schritt 92 wird zur Bildkorrektur die Entzerrung auf die Bilder angewandt. Die Entzerrung kann so durchgeführt werden, dass mit Ausnahme der Pixel am Bildrand Pixel aus den in der Bildebene entzerrten Bildern wieder deckungsgleich mit Pixeln des Bildsensors angeordnet sind. Dazu kann beispielsweise eine Interpolation bei der Entzerrung ausgeführt werden, wie anhand von FIG. 13 noch ausführlicher beschrieben wird, bei der ein Pixel des korrigierten Bildes als gewichtete Überlagerung von Pixeln des aufgenommenen Bildes berechnet wird.

Schritte 91 und 92 können für jedes von N Bildern ausgeführt werden, die für N unterschiedliche Beleuchtungswinkel erfasst wurde, wobei N > 2 und insbesondere N >> 2 sein kann.

Bei Schritt 93 können die N korrigierten Bilder kombiniert werden. Die Bilder können aufsummiert werden. Es können Amplituden- und/oder Phaseninformationsbilder im Ortsraum oder im Fourierraum ermittelt werden.

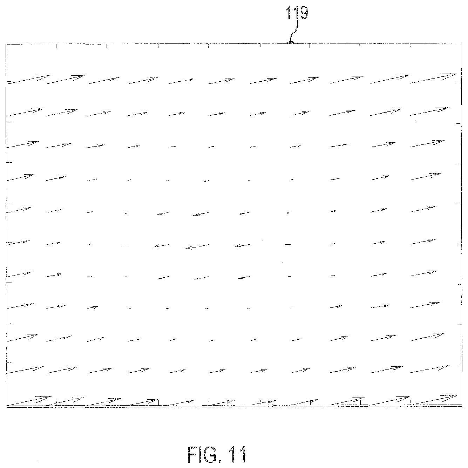

Die Bildaufnahmevorrichtung und Verfahren nach Ausführungsbeispielen können alternativ oder zusätzlich zur Farblängsfehlerkorrektur auch zur Korrektur anderer Abbildungsfehler eingesetzt werden, beispielsweise zur Korrektur eines Astigmatismus, wie anhand von FIG. 11 näher beschrieben wird.

FIG. 11 zeigt eine Teilansicht einer Bildaufnahmevorrichtung nach einem Ausführungsbeispiel, bei der eine nur schematisch dargestellte Optik, beispielsweise der Beleuchtungseinrichtung, einen Astigmatismus aufweist. Ein erster Meridian 101 verläuft in einer ersten Ebene des Astigmatismus. Die erste Ebene des Astigmatismus kann eine erste Fokuslage 102 definieren. Ein zweiter Meridian 106 verläuft in einer zweiten Ebene des Astigmatismus. Die zweite Ebene des Astigmatismus kann eine zweite Fokuslage 107 definieren. Die erste Ebene kann diejenige Ebene sein, für die sich eine minimale Fokuslänge ergibt. Die zweite Ebene kann diejenige Ebene sein, für die sich eine maximale Fokuslänge ergibt.

Eine oder mehrere der Fokuslagen 102, 107 können gegenüber der z=0-Ebene, die von dem Detektorsystem scharf abgebildet wird, verschoben sein. Die Fokuslagen 102, 107 können einen z-Defokus 112, 117 entlang der optischen Achse aufweisen. Der z-Defokus kann feldpunktabhängig variieren.

Bei Beleuchtung des Objekts unter einem Beleuchtungswinkel kann Licht entlang eines Strahls 90 einfallen, dessen Richtung durch den jeweils eingestellten Beleuchtungswinkel festgelegt ist. Zur Astigmatismuskorrektur kann eine Projektion in die Ebenen des Astigmatismus erfolgen. Eine Projektion 103 des unter dem Beleuchtungswinkel einfallenden Strahls 90 in die erste Ebene schließt einen Winkel 104 mit der optischen Achse 5 ein. Der Winkel 104 kann auch als Winkel $\theta_a$ bezeichnet werden. Eine Projektion 108 des unter dem Beleuchtungswinkel einfallenden Strahls 90 in die zweite Ebene schließt einen Winkel 109 mit der optischen Achse 5 ein. Der Winkel 109 kann auch als Winkel $\theta_b$ bezeichnet werden. Die durch die erste Ebene des Astigmatismus definierte Ebene muss nicht mit der x- oder y-Achse des Bildsensors zusammenfallen. Durch eine an sich bekannte Koordinatentransformation in der Ebene des Bildsensors können jedoch die Koordinatenachsen auch so definiert werden, dass beispielsweise die Schnittlinie der ersten Ebene des Astigmatismus mit der Ebene des Bildsensors der x-Achse entspricht und dass die Schnittlinie der ersten Ebene des Astigmatismus mit der Ebene des Bildsensors der y-Achse entspricht.

Zur Astigmatismuskorrektur kann eine Entzerrung auf das Bild angewandt werden, die von der Beleuchtungsrichtung abhängt. Die Entzerrung kann von dem z-Defokus 112, 117 abhängen, der sich für die mehreren Ebenen des Astigmatismus ergibt.

Der durch die Entzerrung zu kompensierende Versatz kann beispielsweise definiert sein durch

$$\tan(\theta_a) \cdot \Delta z_a \tag{3}$$

in der Richtung, die durch die Schnittlinie der ersten Ebene des Astigmatismus mit der Sensorebene definiert ist, und um

$$\tan(\theta_b) \cdot \Delta z_b \tag{4}$$

in der Richtung, die durch die Schnittlinie der zweiten Ebene des Astigmatismus mit der Sensorebene definiert ist. Dabei bezeichnet $\Delta z_a$ den z-Defokus 112 für die erste Ebene des Astigmatismus und $z_b$ den z-Defokus 117 für die zweite Ebene des Astigmatismus.

Eine Feldpunktabhängigkeit des Astigmatismus kann durch die Feldpunktabhängigkeit der Entzerrung berücksichtigt werden. Ein Vektorfeld, das die Entzerrung definiert, kann in der Ebene des Bildsensors veränderlich sein.

FIG. 11 veranschaulicht ein Vektorfeld 119, das die Entzerrung eines Bildes definieren kann. Die Länge und Richtung der Vektoren gibt dabei an, in welche Richtung und um welchen Betrag Pixel verschoben werden, um das aufgenommene Bild zu entzerren. Die Entzerrung kann wie oben beschrieben in Abhängigkeit von der feldpunktabhängigen Defokussierung und dem Beleuchtungswinkel bestimmt werden.

Während unter Bezugnahme auf FIG. 1 bis FIG. 11 beispielhaft Bildaufnahmevorrichtungen und Verfahren beschrieben wurden, mit denen eine Bildfeldwölbungskorrektur und/oder eine Astigmatismuskorrektur ausgeführt werden kann, können die hier beschriebenen Techniken auch zur Korrektur anderer Abbildungsfehler, beispielsweise zur Korrektur chromatischer Aberrationen, verwendet werden.

FIG. 12 ist ein Blockdiagramm 120 einer Bildaufnahmevorrichtung nach einem Ausführungsbeispiel. Die Bildaufnahemvorrichtung kann zur automatischen Bildfeldwölbungskorrektur und/oder Astigmatismuskorrektur eingerichtet sein.

Die Bildaufnahmevorrichtung umfasst eine Beleuchtungseinrichtung 121, die steuerbar ist. Mit der Beleuchtungseinrichtung 121 kann das Objekt sequentiell unter mehrere verschiedenen Beleuchtungswinkeln beleuchtet werden. Eine Beleuchtungssteuerung 122 kann die sequentiell eingestellten Beleuchtungswinkel steuern. Die Beleuchtungseinrichtung 121 kann eine LED-Anordnung umfassen. Die Beleuchtungseinrichtung 121 kann ein steuerbares optisches Element in einer Zwischenbildebene umfassen, das beispielsweise eine bewegliche Lochblende, eine Mikrospiegelanordnung, eine Flüssigkeitskristallmatrix oder einen räumlichen Lichtmodulator umfassen kann.

Ein Bildsensor 123 erfasst für jeden der Beleuchtungswinkel, unter denen das Objekt beleuchtet wird, wenigstens ein Bild. Das Bild kann Information in mehreren Farbkanälen umfassen. Der Bildsensor 123 kann wenigstens einen CCD- oder CMOS-Chip umfassen.

Ein Modul zur Bildkorrektur 124 kann eine Bildkorrektur ausführen. Die Bildkorrektur kann von dem bei Bildaufnahme verwendeten Beleuchtungswinkel abhängen. Die Bildkorrektur kann eine Entzerrung eines, mehrerer oder aller Farbkanäle des Bildes umfassen. Die Entzerrung kann durch eine lineare Abbildung von Pixel des aufgenommenen Bildes in Pixel des korrigierten Bildes definiert sein. Die Entzerrung, die auf ein Bild angewandt wird, kann von den bei der Bildaufnahme der anderen Bilder verwendeten Beleuchtungswinkeln unabhängig sein.

Ein Speichermedium mit Korrekturinformation 125 kann in verschiedenen Formen Information speichern, die von dem Modul zur Bildkorrektur 124 verwendet wird. Die Korrekturinformation kann Information über eine feldpunktabhängige Defokussierung aufgrund von Bildfeldwölbung und/oder eine Defokussierung für unterschiedliche Ebenen des Astigmatismus beinhalten, aus der von dem Modul zur Bildkorrektur 124 die auf das Bild anzuwendende Entzerrung berechnet wird. Die Korrekturinformation kann die Entzerrung für unterschiedliche Beleuchtungswinkel angeben. Die Korrekturinformation kann eine lineare Abbildung definieren, beispielsweise in Form einer Abbildungsmatrix, nach der bei der Bildkorrektur Pixel des ursprünglichen Bildes in Pixel eines korrigierten Bildes abgebildet werden.

Das Modul zur Bildkorrektur 124 kann als anwendungsspezifische Spezialschaltung, Controller, Mikrocontroller, Prozessor oder Mikroprozessor ausgestaltet sein. Das Modul zur Bildkorrektur 124 kann mit dem Bildsensor 123 in einer baulichen Einheit kombiniert sein, die automatisch korrigierte Bilder errechnet. Dadurch kann die Bildkorrektur in Hardware kodiert sein.

Die Bildaufnahmevorrichtung kann so eingerichtet sein, dass die Korrekturinformation durch Messung an der Bildaufnahmevorrichtung selbst ermittelt wird. Die Bildaufnahmevorrichtung kann ein Modul zur Kalibrierung 128 umfassen, das automatisch die Korrekturinformation ermittelt. Dazu können Aufnahmen an mehreren bekannten Referenzobjekten gemacht und rechnerisch weiterverarbeitet werden, um zu bestimmen, wie die Bilder entzerrt werden müssen, um ein Objekt zu rekonstruieren.

Die Bildaufnahmevorrichtung kann ein Modul zur Bildkombination 126 umfassen, mit dem die N korrigierten Bilder kombiniert werden können. Die nach der Bildkorrektur ermittelten Bilder können aufsummiert oder anderweitig weiter verarbeitet werden. Das Modul zur Bildkombination 126 kann eingerichtet sein, um einen Fourier-Ptychographie-Algorithmus auszuführen. Das Modul zur Bildkombination 126 kann eingerichtet sein, um Amplituden- und/oder Phaseninformation des Objekts im Fourierraum zu ermitteln.

Die Bildaufnahmevorrichtung kann weitere Einheiten umfassen. Beispielsweise kann eine Einheit zur Autofokuseinstellung vorhanden sein.

Allgemein wird zur Entzerrung ein korrigiertes Bild $I_c$ aus einem Bild I ermittelt. Bei einer einfachen Implementierung kann das entzerrte Bild berechnet werden als

$$I_c (u, v) = I(u - \Delta x(u, v), v - \Delta y(u,v)) \qquad (5)$$

Dabei bezeichnen u und v Pixelkoordinaten entlang der x- und y-Richtung des Bildsensors. Das feldpunktabhängige Vektorfeld $(\Delta x(u, v), \Delta y(u, v))$ definiert die Entzerrung. Zur weiteren Verbesserung der Bildkorrektur kann berücksichtigt werden, dass die zu korrigierende Verzeichnung nicht immer durch eine Verschiebung eines Pixels um eine ganze Pixelzahl in x- und y-Richtung korrigiert werden kann. In diesem Fall kann eine Rundung oder eine Interpolation ausgeführt werden.

Beispielsweise kann eine Rundung vorgesehen sein, so dass das korrigierte Bild nach

$$I_c (u, v; j) = I(u - \text{round}(\Delta x_j), v - \text{round}(\Delta y_j); j) \qquad (6)$$

ermittelt wird. Dabei bezeichnet round$(\cdot)$ die Rundungsfunktion. Es können auch die Abrundungsfunktion $\lfloor \cdot \rfloor$ oder die Aufrundungsfunktion $\lceil \cdot \rceil$ anstelle der Rundungsfunktion in Gleichung (6) verwendet werden. Die Rundung kann bereits berücksichtigt sein, wenn die Verschiebung nichtflüchtig in der Bildaufnahmevorrichtung gespeichert ist.

Es kann auch eine Interpolation zwischen unterschiedlichen Pixelwerten vorgenommen werden. Dabei können beispielsweise vier Pixelwerte oder auch mehr als vier Pixelwerte interpoliert werden, um das entzerrte Bild bei der Bildkorrektur zu ermitteln. Pixel des korrigierten Bildes können berechnet werden als

$$I_c (u, v) = \Sigma_{m, n} w(u, v, m, n) \cdot I(m, n). \qquad (7)$$

Dabei bezeichnet $w(u, v, m, n)$ einen Gewichtungsfaktor, mit dem der Pixelwert des Pixels an der Stelle $(m, n)$ des aufgenommenen Bildes nach der Entzerrung in den Pixelwert des korrigierten Bildes an der Stelle $(u, v)$ eingeht.

FIG. 13 veranschaulicht die Entzerrung bei der Bildkorrektur. Der Bildsensor weist eine Anordnung von Pixeln 130 auf. Die Komponenten des Vektors 136 des Vektorfeldes, das die Entzerrung definiert, müssen keine ganzzahligen Vielfachen der Pixelabstände in den zwei Koordinatenrichtungen 137, 138 sein. Bei einer Interpolation gemäß Gleichung (7) können die Pixelwerte der Pixel 132-135 linear interpoliert werden, um den Pixelwert für das Pixel 131 im korrigierten Bild zu ermitteln.

Während Ausführungsbeispiele unter Bezugnahme auf die Figuren beschrieben wurden, können Abwandlungen bei weiteren Ausführungsbeispielen realisiert werden. Während die Bildaufnahmevorrichtung nach Ausführungsbeispielen insbesondere ein Mikroskopsystem sein kann, können die beschriebenen Techniken auch bei anderen Abbildungssystemen verwendet werden. Während die beschriebenen Techniken zur Bildfeldwölbungskorrektur und/oder Astigmatismuskorrektur verwendet werden können, können alternativ oder zusätzlich auch andere Abbildungsfehler korrigiert werden. Die korrigierten Bilder können auf eine Vielzahl unterschiedlicher Weisen miteinander kombiniert werden. Beispielsweise können die korrigierten Bilder für eine Fourier-Ptychographie verwendet werden oder zur Ermittlung eines Ergebnisbildes aufaddiert werden.

## Patentansprüche

1. Bildaufnahmevorrichtung, umfassend:

   eine Beleuchtungseinrichtung (11, 12; 121), die steuerbar ist, um eine Mehrzahl von Beleuchtungswinkeln (4) für eine Beleuchtung eines Objekts einzustellen;
   einen Detektor (14) mit einem Bildsensor (15; 123), der eingerichtet ist, um eine Mehrzahl von Bildern (41-43) des Objekts für die Mehrzahl von Beleuchtungswinkeln (4) zu erfassen;
   eine elektronische Auswerteeinrichtung (20) zur Verarbeitung der Mehrzahl von Bildern (41-43), die mit dem Bildsensor (15; 123) gekoppelt ist, wobei die elektronische Auswerteeinrichtung (20) eingerichtet ist,
   um auf jedes Bild der Mehrzahl von Bildern (41-43) eine Bildkorrektur anzuwenden, und
   um die durch die Bildkorrektur korrigierten Bilder (44-46) zu kombinieren,
   wobei die Bildkorrektur eine Entzerrung (T1, T2, T3) umfasst, wobei die Entzerrung (T1, T2, T3) von dem bei der Aufnahme des jeweiligen Bildes (41-43) verwendeten Beleuchtungswinkel (4) abhängt,
   wobei die elektronische Auswerteeinrichtung (20) eingerichtet ist, um durch die Entzerrung ($T_1$, $T_2$, $T_3$) eine feldpunktabhängige Defokussierung zu korrigieren,
   **dadurch gekennzeichnet, dass** ein die Entzerrung ($T_1$, $T_2$, $T_3$) definierendes Vektorfeld (119) sowohl von dem Beleuchtungswinkel (4) bei Aufnahme des Bildes (41-43), auf das die Bildkorrektur angewandt wird, als auch von der feldpunktabhängigen Defokussierung abhängt.

2. Bildaufnahmevorrichtung nach Anspruch 1,
   wobei die elektronische Auswerteeinrichtung (20) eingerichtet ist, um durch die Entzerrung ($T_1$, $T_2$, $T_3$) eine Bildfeldwölbung (54) zu korrigieren.

3. Bildaufnahmevorrichtung nach Anspruch 2,
   wobei die Entzerrung ($T_1$, $T_2$, $T_3$) von einer der Bildfeldwölbung (54) zugeordneten Objektfeldwölbung (63) abhängt.

4. Bildaufnahmevorrichtung nach Anspruch 2 oder Anspruch 3,
   wobei die Entzerrung ($T_1$, $T_2$, $T_3$), die auf ein Bild angewandt wird, von einem feldpunktabhängigen Versatz (77-79) eines Punkts (71-73) einer Objektebene (70) abhängt, den der Punkt (71-73) erfährt, wenn er unter dem Beleuchtungswinkel (4) auf eine gewölbte Fläche (63), die von einem optischen System der Bildaufnahmevorrichtung (1) auf eine Ebene des Bildsensors (15; 123) abgebildet wird, projiziert wird.

5. Bildaufnahmevorrichtung nach einem der Ansprüche 2 bis 4,
   wobei die elektronische Auswerteeinrichtung (20) eingerichtet ist, um ein die Entzerrung ($T_1$, $T_2$, $T_3$) definierendes Vektorfeld (119) in Abhängigkeit von dem bei der Aufnahme des jeweiligen Bildes verwendeten Beleuchtungswinkel (4) zu berechnen.

6. Bildaufnahmevorrichtung nach einem der vorhergehenden Ansprüche,
   wobei die elektronische Auswerteeinrichtung (20) eingerichtet ist, um durch die Entzerrung ($T_1$, $T_2$, $T_3$) einen Astigmatismus zu korrigieren.

7. Bildaufnahmevorrichtung nach Anspruch 6,
   wobei die Entzerrung ($T_1$, $T_2$, $T_3$), die auf ein Bild angewandt wird, von einer Lage eines unter dem Beleuchtungswinkel (4) einfallenden Strahls (3) zu wenigstens zwei Ebenen des Astigmatismus abhängt.

8. Bildaufnahmevorrichtung nach einem der vorhergehenden Ansprüche,
   wobei für die Mehrzahl von Beleuchtungswinkeln (4) jeweils Information über die anzuwendende Entzerrung ($T_1$,

$T_2$, $T_3$) nichtflüchtig in einem Speichermedium der Bildaufnahmevorrichtung gespeichert ist.

9. Bildaufnahmevorrichtung nach einem der vorhergehenden Ansprüche,
wobei die elektronische Auswerteeinrichtung (20) eingerichtet ist, um die durch die Bildkorrektur korrigierten Bilder (44-46) zu addieren, um ein Ergebnisbild (47) zu errechnen.

10. Bildaufnahmevorrichtung nach einem der vorhergehenden Ansprüche,
wobei die elektronische Auswerteeinrichtung (20) eingerichtet ist, um die Bildkorrektur auf ein Bild anzuwenden, das für einen Beleuchtungswinkel (4) erfasst wurde, während der Detektor (14) ein weiteres Bild für einen weiteren Beleuchtungswinkel (4) erfasst.

11. Bildaufnahmevorrichtung nach einem der vorhergehenden Ansprüche,
wobei die Bildaufnahmevorrichtung (1) ein Mikroskopsystem ist.

12. Verfahren zur Bildaufnahme, umfassend:

Erfassen einer Mehrzahl von Bildern (41-43), wenn ein Objekt (2) unter einer Mehrzahl von Beleuchtungswinkeln (4) beleuchtet wird; und
Verarbeiten der Mehrzahl von Bildern (41-43), wobei das Verarbeiten umfasst: Anwenden einer Bildkorrektur auf jedes Bild der Mehrzahl von Bildern (41-43), und
Kombinieren der Mehrzahl von Bildern (41-43) nach dem Anwenden der Bildkorrektur,
wobei die Bildkorrektur eine Entzerrung (T1, T2, T3) umfasst, die von dem Beleuchtungswinkel (4) bei der Aufnahme des jeweiligen Bildes abhängt,
wobei durch die Entzerrung ($T_1$, $T_2$, $T_3$) eine feldpunktabhängige Defokussierung korrigiert wird,
**dadurch gekennzeichnet, dass** ein die Entzerrung ($T_1$, $T_2$, $T_3$) definierendes Vektorfeld (119) sowohl von dem Beleuchtungswinkel (4) bei Aufnahme des Bildes (41-43), auf das die Bildkorrektur angewandt wird, als auch von der feldpunktabhängigen Defokussierung abhängt.

13. Verfahren nach Anspruch 12,
das von der Bildaufnahmevorrichtung (1) nach einem der Ansprüche 1 bis 11 ausgeführt wird.

**Claims**

1. Image-recording apparatus, comprising:

an illuminating device (11, 12; 121) which is controllable in order to set a plurality of illumination angles (4) for illuminating an object;
a detector (14) comprising an image sensor (15; 123), configured to capture a plurality of images (41-43) of the object for the plurality of illumination angles (4);
an electronic evaluating device (20) for processing the plurality of images (41-43), coupled to the image sensor (15; 123), wherein the electronic evaluating device (20) is configured to
apply an image correction to each image of the plurality of images (41-43), and
combine the images (44-46) corrected by the image correction,
wherein the image correction comprises a rectification (T1, T2, T3), wherein the rectification (T1, T2, T3) depends on the illumination angle (4) used when recording the respective image (41-43),
wherein the electronic evaluating device (20) is configured to correct field-point-dependent defocusing by way of the rectification ($T_1$, $T_2$, $T_3$),
**characterized in that** a vector field (119) defining the rectification ($T_1$, $T_2$, $T_3$) depends both on the illumination angle (4) when recording the image (41-43) to which the image correction is applied and on the field-point-dependent defocusing.

2. Image-recording apparatus according to Claim 1,
wherein the electronic evaluating device (20) is configured to correct a field curvature (54) by way of the rectification ($T_1$, $T_2$, $T_3$).

3. Image-recording apparatus according to Claim 2,
wherein the rectification ($T_1$, $T_2$, $T_3$) depends on an object field curvature (63) assigned to the field curvature (54).

**4.** Image-recording apparatus according to Claim 2 or Claim 3,
wherein the rectification ($T_1$, $T_2$, $T_3$) which is applied to an image depends on a field-point-dependent offset (77-79) of a point (71-73) of an object plane (70), said point (71-73) experiencing said offset if it is projected onto a curved surface (63), which is imaged onto a plane of the image sensor (15; 123) by an optical system of the image-recording apparatus (1), at the illumination angle (4).

**5.** Image-recording apparatus according to one of Claims 2 to 4,
wherein the electronic evaluating device (20) is configured to calculate a vector field (119) defining the rectification ($T_1$, $T_2$, $T_3$) depending on the illumination angle (4) used when recording the respective image.

**6.** Image-recording apparatus according to one of the preceding claims,
wherein the electronic evaluating device (20) is configured to correct an astigmatism by way of the rectification ($T_1$, $T_2$, $T_3$).

**7.** Image-recording apparatus according to Claim 6,
wherein the rectification ($T_1$, $T_2$, $T_3$) which is applied to an image depends on a position of a beam (3), incident at the illumination angle (4), in relation to at least two planes of the astigmatism.

**8.** Image-recording apparatus according to one of the preceding claims,
wherein, for the plurality of illumination angles (4), information about the rectification ($T_1$, $T_2$, $T_3$) to be applied is respectively stored in non-volatile fashion in a storage medium of the image-recording apparatus.

**9.** Image-recording apparatus according to one of the preceding claims,
wherein the electronic evaluating device (20) is configured to add the images (44-46) corrected by the image correction in order to calculate a results image (47) .

**10.** Image-recording apparatus according to one of the preceding claims,
wherein the electronic evaluating device (20) is configured to apply the image correction onto an image which was captured for one illumination angle (4) while the detector (14) captures a further image for a further illumination angle (4).

**11.** Image-recording apparatus according to one of the preceding claims,
wherein the image-recording apparatus (1) is a microscope system.

**12.** Method for recording images, comprising:

capturing a plurality of images (41-43) when an object (2) is illuminated at a plurality of illumination angles (4); and processing the plurality of images (41-43), wherein the processing comprises:

applying an image correction to each image of the plurality of images (41-43), and
combining the plurality of images (41-43) after applying the image correction,

wherein the image correction comprises a rectification (T1, T2, T3) which depends on the illumination angle (4) when recording the respective image,
wherein a field-point-dependent defocusing is corrected by way of the rectification ($T_1$, $T_2$, $T_3$), **characterized in that** a vector field (119) defining the rectification ($T_1$, $T_2$, $T_3$) depends both on the illumination angle (4) when recording the image (41-43) to which the image correction is applied and on the field-point-dependent defocusing.

**13.** Method according to Claim 12,
which is carried out by the image-recording apparatus (1) according to one of Claims 1 to 11.

**Revendications**

**1.** Arrangement d'enregistrement d'images, comprenant :

un dispositif d'éclairage (11, 12 ; 121) qui peut être commandé pour régler une pluralité d'angles d'éclairage (4) pour un éclairage d'un objet ;

un détecteur (14) comprenant un capteur d'image (15 ; 123) qui est conçu pour capturer une pluralité d'images (41-43) de l'objet pour la pluralité d'angles d'éclairage (4) ;

un dispositif d'interprétation électronique (20) destiné à traiter la pluralité d'images (41-43) et qui est connecté au capteur d'image (15 ; 123), le dispositif d'interprétation électronique (20) étant conçu pour appliquer une correction d'image sur chaque image de la pluralité d'images (41-43), et

combiner les images (44-46) corrigées par la correction d'image,

la correction d'image comprenant une correction de distorsion (T1, T2, T3), la correction de distorsion (T1, T2, T3) étant dépendante de l'angle d'éclairage (4) utilisé lors de l'enregistrement de l'image (41-43) respective,

le dispositif d'interprétation électronique (20) étant conçu pour corriger, par la correction de distorsion ($T_1$, $T_2$, $T_3$), un défaut de mise au point dépendant du point de champ,

**caractérisé en ce qu'**un champ vectoriel (119) qui définit la correction de distorsion ($T_1$, $T_2$, $T_3$) dépend à la fois de l'angle d'éclairage (4) utilisé lors de l'enregistrement de l'image (41-43) sur laquelle est appliquée la correction d'image et du défaut de mise au point dépendant du point de champ.

2. Arrangement d'enregistrement d'images selon la revendication 1, le dispositif d'interprétation électronique (20) étant conçu pour corriger, par la correction de distorsion ($T_1$, $T_2$, $T_3$), une courbure du champ d'image (54).

3. Arrangement d'enregistrement d'images selon la revendication 2, la correction de distorsion ($T_1$, $T_2$, $T_3$) étant dépendante d'une courbure du champ d'objet (63) associée à la courbure du champ d'image (54).

4. Arrangement d'enregistrement d'images selon la revendication 2 ou la revendication 3, la correction de distorsion ($T_1$, $T_2$, $T_3$) qui est appliquée sur une image étant dépendante d'un décalage (77-79) dépendant du point de champ, d'un point (71-73) d'un plan d'objet (70) que subit le point (71-73) lorsqu'il est projeté sous l'angle d'éclairage (4) sur une surface bombée (63) qui est représentée par un système optique de l'arrangement d'enregistrement d'images (1) sur un plan du capteur d'image (15 ; 123).

5. Arrangement d'enregistrement d'images selon l'une des revendications 2 à 4, le dispositif d'interprétation électronique (20) étant conçu pour calculer un champ vectoriel (119) définissant la correction de distorsion ($T_1$, $T_2$, $T_3$) en fonction de l'angle d'éclairage (4) utilisé lors de l'enregistrement de l'image respective.

6. Arrangement d'enregistrement d'images selon l'une des revendications précédentes, le dispositif d'interprétation électronique (20) étant conçu pour corriger un astigmatisme par la correction de distorsion ($T_1$, $T_2$, $T_3$).

7. Arrangement d'enregistrement d'images selon la revendication 6, la correction de distorsion ($T_1$, $T_2$, $T_3$) qui est appliquée sur une image étant dépendante d'une position d'un rayon (3) incident sous l'angle d'éclairage (4) par rapport à au moins deux plans de l'astigmatisme.

8. Arrangement d'enregistrement d'images selon l'une des revendications précédentes, des informations à propos de la correction de distorsion ($T_1$, $T_2$, $T_3$) à appliquer étant respectivement mémorisées de manière non volatile dans un support de mémorisation de l'arrangement d'enregistrement d'images pour la pluralité d'angles d'éclairage (4).

9. Arrangement d'enregistrement d'images selon l'une des revendications précédentes, le dispositif d'interprétation électronique (20) étant conçu pour additionner les images (44-46) corrigées par la correction d'image afin de calculer une image de résultat (47).

10. Arrangement d'enregistrement d'images selon l'une des revendications précédentes, le dispositif d'interprétation électronique (20) étant conçu pour appliquer la correction d'image sur une image qui a été capturée pour un angle d'éclairage (4) pendant que le détecteur (14) capture une image supplémentaire pour un angle d'éclairage (4) supplémentaire.

11. Arrangement d'enregistrement d'images selon l'une des revendications précédentes, l'arrangement d'enregistrement d'images (1) étant un système de microscope.

12. Procédé d'enregistrement d'image, comprenant :

la capture d'une pluralité d'images (41-43) lorsqu'un objet (2) est éclairé sous une pluralité d'angles d'éclairage (4) ; et

le traitement de la pluralité d'images (41-43), le traitement comprenant :

l'application d'une correction d'image sur chaque image de la pluralité d'images (41-43), et

la combinaison de la pluralité d'images (41-43) après l'application de la correction d'image,

la correction d'image comprenant une correction de distorsion (T1, T2, T3) qui dépend de l'angle d'éclairage (4) lors de l'enregistrement de l'image respective,

un défaut de mise au point dépendant du point de champ étant corrigé par la correction de distorsion ($T_1$, $T_2$, $T_3$),

**caractérisé en ce qu'**un champ vectoriel (119) qui définit la correction de distorsion ($T_1$, $T_2$, $T_3$) dépend à la fois de l'angle d'éclairage (4) lors de l'enregistrement de l'image (41-43) sur laquelle est appliquée la correction d'image et du défaut de mise au point dépendant du point de champ.

13. Procédé selon la revendication 12, lequel est mis en œuvre par l'arrangement d'enregistrement d'images (1) selon l'une des revendications 1 à 11.

1

21 — Korrekturinformation

20 — elektronische
Auswerteeinrichtung

15 — Bildsensor

14 — Detektor

Z
X

5

13

4

3

2

12

11 — Lichtquelle

FIG. 1

30

Beleuchten des Objekts unter einem ersten
Beleuchtungswinkel und
Erfassen eines ersten Bildes
31

Beleuchten des Objekts unter einem zweiten
Beleuchtungswinkel und
Erfassen eines zweiten Bildes
32

Beleuchten des Objekts unter einem N-ten
Beleuchtungswinkel und
Erfassen eines N-ten Bildes
33

Anwenden einer Bildkorrektur, die eine Entzerrung
umfasst, auf die Bilder
34

Kombinieren der Bilder
35

FIG. 2

FIG. 3

FIG. 4

FIG. 5

FIG. 6

FIG. 7

FIG. 8

90

Ermitteln der Entzerrung abhängig von
Bildfeldwölbung und Beleuchtungswinkel — 91

Anwenden der Entzerrung auf das unter dem
Beleuchtungswinkel erfasste Bild — 92

Weitere Verarbeitung der N Bilder — 93

FIG. 9

FIG. 10

119

FIG. 11

120

| Kalibrierung | → | Korrektur-information |
|---|---|---|

128

125

| Bildsensor | → | Bildkorrektur |
|---|---|---|

123

124

| Beleuchtungs-einrichtung | | Ergebnisbild-berechnung |
|---|---|---|

121

126

| Beleuchtungs-steuerung |
|---|

122

**FIG. 12**

130

132    133

136

138

134    135

131

137

**FIG. 13**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2012098950 A1
- WO 2009095422 A2
- DE 102011076435 A1